# EUROPÄISCHE PATENTSCHRIFT

(11) **EP 1 431 247 B1**
(45) Veröffentlichungstag und Bekanntmachung des Hinweises auf die Patenterteilung: **11.04.2007**
(21) Anmeldenummer: 03104697.2
(22) Anmeldetag: 15.12.2003
(51) Int. Cl.: C01B 33/44, C04B 14/20, C04B 30/00, C09K 21/02

(54) **Verwendung von Schichtsilikat-Intercalationsverbindungen mit erhöhtem Expansionsvolumen als Brandschutzadditiv**
Use of layered silicate intercalation compounds with increased volume of expansion as , process for its preparation and its use
Composés intercalaires silicate en couches avec volume d'expansion augmenté, utilisation et procédé pour la préparation de ces composés

(30) Priorität: 17.12.2002 DE 10259083
(43) Veröffentlichungstag der Anmeldung: 23.06.2004
(73) Patentinhaber: HILTI Aktiengesellschaft, 9494 Schaan (LI)
(72) Erfinder: Wenzel, Antje, 86928, Hofstetten (DE); Reinheimer, Arne, 87668, Zellerberg (DE)
(74) Vertreter: Wildi, Roland

(56) Entgegenhaltungen:
- EP-A- 0 429 246
- US-A- 4 655 842
- US-A- 5 102 464

## Beschreibung

Die vorliegende Erfindung betrifft die Verwendung von intumeszierenden Schichtsilikat-Intercalationsverbindungen mit erhöhter Expansionsgeschwindigkeit und/oder modifizierter Onset-Temperatur als intumeszierendes Brandschutzadditiv für die Herstellung von Flammschutz-Materialien, insbesondere für Brandschutz-Abdichtungen von Durchbrüchen, Durchführungen und sonstigen Öffnungen in Wänden, Böden und/oder Decken von Gebäuden.

Das US-Patent 5,102,464 beschreibt stabile Vermiculitdispersionen, die sich im wesentlichen nicht absetzen, und deren Herstellung. Das Verfahren besteht darin, daß man Vermiculitkristalle mit Citratanionen und einem Kation, welches das Quellen der Kristalle in einer Richtung senkrecht zu der Hauptspaltungsebene der Kristalle während des Eintauchens in Wasser fördert, behandelt, die behandelten Kristalle in Wasser einbringt, sie quellen läßt und die gebildeten gequollenen Kristalle in dem Wasser einer Scherwirkung unterwirft, um die Vermiculitkristalle zu delaminieren unter Bildung einer Suspension von delaminierten Vermiculitplättchen. Die in diese Weise hergestellten Dispersionen von delaminierten Vermiculitplättchen sollen für die Herstellung von Überzügen eingesetzt werden. Allerdings sind diese Vermiculitplättchen nicht mehr unter Wärmeeinwirkung expandierbar und damit auch nicht intumeszierbar.

Gleiches gilt für die aus dem US-Patent 4,655.842 bekannten Vermiculitdispersionen, welche ebenfalls dadurch hergestellt werden, daß man Vermiculitkristalle mit Citratanionen und einem Kation behandelt, welches das Quellen der Kristalle während des Eintauchens in Wasser fördert, die behandelten Kristalle in Wasser einbringt, sie dort quellen läßt und die gebildeten gequollenen Kristalle in dem Wasser einer Scherwirkung unterwirft, um die Vermiculitkristalle zu delaminieren und eine Suspension aus delaminierten Vermiculitplättchen zu erzeugen.

Blähfähige Schichtsilikate, wie beispielsweise Vermiculit, sind aus Octaeder- und Tetraeder-Schichten aufgebaut, zwischen denen austauschbare Kationen, wie Magnesium- und Aluminium-Kationen eingelagert sind, deren Verhältnis je nach Herkunft des Schichtsilikats variiert. Aufgrund des Vorhandenseins von Zwischenschichtwasser unterliegen solche blähfähigen SchichtSilikate beim Erhitzen einer Expansion, welche dadurch hervorgerufen wird, daß das Zwischenschichtwasser bei höherer Temperatur spontan freigesetzt wird und zur Folge hat, daß die Schichten auseinander gedrängt werden. Die Temperatur, bei der der Expansionsvorgang einsetzt, wird als Onset-Temperatur bezeichnet, die beispielsweise bei nativem blähfähigem Vermiculit, wie er in dem nachfolgenden Vergleichsbeispiel eingesetzt wird, bei 320°C liegt.

Solche blähfähigen Schichtsilikate werden ebenso wie Blähgraphit aufgrund dieses thermischen Expansionsverhaltens als intumeszierendes Brandschutzadditiv für die Herstellung von Flammschutzzusammensetzungen für beispielsweise Brandschutz-Abdichtungen von Durchbrüchen, Durchführungen und sonstigen Öffnungen in Wänden, Böden und/oder Ecken von Gebäuden eingesetzt. Im Brandfall dehnt sich das in der Flammschutz-Zusammensetzung vorliegende blähfähige Schichtsilikat aus, was zur Folge hat, daß auch nach dem Abbrennen des Matrixmaterials der Flammschutz-Zusammensetzung die abzudichtende Öffnung während einer weiteren Zeitdauer durch die Ausdehnung des Schichtsilikats verschlossen bleibt.

Für solche Brandschutz-Abschottungssysteme werden je nach Art und materieller Beschaffung der Rohrdurchführungen unterschiedliche Anforderungen gestellt. So ist beispielsweise bei den sehr schnell schmelzenden und verbrennenden Polyethylenrohren ein Verschließen der entstehenden Öffnung innerhalb kürzester Zeit erforderlich, was eine hohe Expansionsgeschwindigkeit und ein großes Expansionsvolumen des intumeszierenden Materials voraussetzt. Demzufolge ist ebenso wie bei der Onset-Temperatur auch hinsichtlich dieser Parameter ein hohes Maß an Variabilität notwendig, um beispielsweise bei der Herstellung solcher Brandschutzmaterialien das Ausdehnungsverhalten des intumeszierenden Flammschutz-Materials gezielt auf die speziellen Produktanforderungen einstellen zu können. Im Gegensatz zu Blähgraphit, der bislang als Standard-Intumeszenzmaterial eingesetzt wird, aber bei hohen Temperaturen oxidativen Abbrand zeigt, zeichnen sich die blähfähigen Schichtsilikate, wie Vermiculit, durch ihre hohe thermische Beständigkeit aus. In nativer Form besitzen diese blähfähigen Schichtsilikate aber nur ein mäßiges druckaufbauendes Expansionsverhalten, welches den Einsatz dieser Materialien im passiven Brandschutz stark einschränkt.

Die geringe Anzahl der kommerziell erhältlichen Vermiculit-Typen ermöglicht die bei der gezielten Anpassung der Flammschutz-Materialien an den angestrebten Einsatzzweck erforderlichen Anpassungen der Volumen- und Geschwindigkeitssteigerung sowie die nötige Flexibilität nur unzureichend.

Die im Handel erhältlichen Schichtsilikate sind jedoch bedingt doch die eingeschränkte Auswahl an eingelagerten Intercalat-Verbindungen (Gast-Verbindungen) in der Variation ihrer Expansionseigenschaften, namentlich ihres Expansionsvolumens und der Onset-Temperatur limitiert. Um jedoch flexibel auf die speziellen Produktanforderungen, insbesondere im Bereich des passiven Brandschutzes reagieren zu können, sind expansionsfähige Schichtsilikat-Intercalationsverbindungen notwendig, die eine höhere Variationsbreite und gezielte Einstellung ihrer Intumeszenzeigenschaften, insbesondere im Hinblick auf das Expansionsvolumen und dem Onset, das heißt die Temperatur beim Expansionsbeginn, zu ermöglichen.

Die Modifizierung von blähfähigen Schichtsilikaten durch Intercalation von Gastmolekülen ist bereits bekannt und erfolgt überlicherweise durch Dispergieren der Silikatteilchen in einer Lösung der entsprechenden Gastverbindung. Als Gastmoleküle können sowohl anorganische Salze als auch organische Verbindungen eingelagert werden. Die Onset-Temperatur der kommerziell zur Verfügung stehenden Schichtsilikate liegt bei etwa 300°C.

So beschreibt das US-Patent 4,305,992 ein intumeszierendes Bahnmaterial mit stark verringertem negativem Expansionsverhalten, welches einen blähfähigen Vermiculit mit einer Teilchengröße von etwa 0,1 mm bis 6 mm enthält, dessen Onset-Temperatur durch Kationenaustausch mit Ammoniumphosphat, Ammoniumcarbonat, Ammoniumacetat, Ammoniumhydroxid und Harnstoff auf eine signifikant niedrigere Temperatur als die der herkömmlichen Vermiculite eingestellt worden ist.

Gegenstand des US-Patents 5,116,537 und der korrespondierenden Europäischen Patentanmeldung 0 429 246 ist ein bei niedriger Temperatur expandierbarer Vermiculit und ein intumeszierendes Bahnmaterial, welches diesen als intumeszierendes Brandschutzadditiv enthält. In der Beschreibung wird darauf hingewiesen, daß der aus der oben genannten US-Patentschrift 4,305,992 bekannte Vermiculit Expansionstemperaturen aufweist, die für viele Anwendungszwecke immer noch zu hoch sind, so daß die Lehre dieses Standes der Technik darauf abzielt, die Expansionstemperatur des Vermiculits noch weiter abzusenken. Dies wird dadurch erreicht, daß ein Kationenaustausch mit Kaliumionen bewirkt wird, welche durch den Einsatz einer Kaliumnitratlösung eingebracht werden. Im Vergleich zu dem Ionenaustausch mit Ammoniumnitrat, Kaliumchlorid und Ammoniumchlorid lassen sich dadurch, wie angegeben wird, noch niedrigere Expansionstemperaturen erreichen.

Allerdings vermögen die nach diesem Stand der Technik erhaltenen blähfähigen Schichtsilikate nicht vollständig zu befriedigen, weil sich keine gezielte Abstimmung der Eigenschaften des intumeszierenden Brandschutzadditivs auf die jeweilige Bindemittelmatrix des Brandschutzmaterials erreichen läßt. Wie oben bereits ausgeführt worden ist, müssen beim passiven Brandschutz schmelzende Metall- und Kunststoffrohre durch den Blähvorgang der Intumeszenzmaterialien abgequetscht werden, um dadurch den durch den Schrumpfungsprozeß der Rohrdurchführungen entstehenden Hohlraum schnell wieder zu verschließen unter Ausbildung einer mechanisch stabilen und thermisch isolierenden Schutzschicht. Hierfür sind Intumeszenzmaterialien mit druckaufbauender Expansion erforderlich, bei denen der Expansionsprozeß trotz Widerstand beziehungsweise Gegendruck nicht abbricht, wie dies beispielsweise bei der chemischen Intumeszenz, die durch Reaktion von Kohlenstoff-Spendern (beispielsweise Stärke und Pentaerythrit), Säurespendern (beispielsweise Ammoniumpolyphosphat) und Treibmitteln (beispielsweise Melamin) der Fall ist.

Des weiteren darf der Expansionsprozeß erst dann einsetzen, wenn die Bindemittelmatrix der Brandschutz-Zusammensetzung erweicht ist, da sich erst dann eine synergistische Wirkung und die bestmögliche Effizienz der druckaufbauenden Expansion des blähfähigen Schichtsilikats erreichen läßt. Es ist daher erforderlich, über blähfähige Schichtsilikate zu verfügen, deren Eigenschaftsprofil bezüglich des Expansionsverhaltens gezielt und genauer eingestellt werden kann, wobei es insbesondere darauf ankommt, bei erhöhter Expansionsgeschwindigkeit die Onset-Temperaturen in der gewünschten Weise modifizieren zu können.

Darüber hinaus sind die nach der Lehre der US-Patentschrift 5,116,537 beziehungsweise der korrespondierenden Europäischen Patentanmeldung 0 429 246 unter Verwendung von Kaliumnitrat hergestellten blähfähigen Vermiculite für den Brandschutz insbesondere wegen des korrosiven Verhaltens und der potentiellen Gesundheitsgefährdung des in dem Vermiculit verbliebenen Kaliumnitrats ungeeignet. Für die Herstellung geeigneter passiver Brandschutzprodukte ist es erforderlich, die Folgeschäden und die gesundheitlichen Risiken möglichst gering zu halten und giftige, aggressive oder brandfördernde Additive und Zusatzstoffe zu vermeiden, um die Brandlast so gering wie möglich zu halten. Da Kaliumnitrat als Intercalationsverbindung bei der Zersetzung des blähfähigen Schichtsilikats korrosive nitrose Gase freisetzt, sind die Vermiculite dieses Standes der Technik insbesondere bei der Anwendung als Abdichtung für Kabeldurchführungen nachteilig. Unter Berücksichtigung der Tatsache, daß ein solches Brandschutzprodukt bis zu über 40% des intumeszierenden Brandschutzadditivs, also des Kaliumnitratausgetauschten Vermiculits, enthalten kann, ergeben sich im Brandfall sehr hohe Konzentrationen an bei der Zersetzung freiwerdenden Gasen. Dies ist besonders erschwerend im Fall von großen abzudichtenden Öffnungen für Kabelschotts und/oder Kabelschächte mit hoher Kabelbelegung, wie sie im Telekommunikationsbereich und bei Netzwerkleitungen auftreten, da neben hohen Materialmengen für die Brandschutzabdichtung häufig auch kleine Räumlichkeiten vorliegen, so daß sich eine unerwünschte Aufkonzentrierung der giftigen Rauchgase ergeben kann.

Schließlich ist Kaliumnitrat, welches in den Schichtsilikaten des genannten Standes der Technik enthalten ist, aufgrund seiner Eigenschaften als Flammschutzmittel ungeeignet, da es sich um einen brandfördernden Stoff handelt, der durch Sauerstoffabgabe die Verbrennung unterhält und damit den Abbau der Polymermatrix der intumeszierenden Brandschutzprodukte aktiv fördert. Da Flammschutzsysteme darauf abzielen, die Ausbreitung des Brandherdes zu vermeiden und eine Selbstverlöschung des Brandes zu bewirken, erscheint der Einsatz von mit Kaliumnitrat durch Kationenaustausch modifzierten blähfähigen Schichtsilikaten als intumeszierendes Brandschutzadditiv im Bereich des Brandschutzes in der Tat völlig ungeeignet.

Die Aufgabe der vorliegenden Erfindung besteht also darin, Schichtsilikat-Intercalationsverbindungen anzugeben, welche für die Verwendung für den passiven Brandschutz geeignet sind und die bei Druck aufbauendem Expansionsverhalten in ihrer höheren Expansionsgeschwindigkeit und ihrer Onset-Temperatur gezielt einstellbar sind und damit in besonders guter Weise als intumeszierendes Brandschutzadditiv für die Herstellung von Flammschutz-Materialien eignen.

Es hat sich überraschenderweise gezeigt, daß diese Aufgabe gelöst werden kann durch die Verwendung von durch Einlagern spezifischer Intercalatverbindungen in natives, blähfähiges Schichtsilikat erhaltenen intumeszierenden Schichtsilikat-intercalationsverbindungen, die nicht nur über die Auswahl des entsprechenden Metallkations sondern auch über die Auswahl des eingesetzten Anions, die bei ihrer Zersetzung einen Betrag zum Expansionsvorgang des Schichtsilikats leisten, gezielt an die angestrebten Expansionseigenschaften angepaßt werden können.

Die oben genannte Aufgabe wird daher gelöst durch das Verfahren gemäß Hauptanspruch. Die Unteransprüche betreffen bevorzugte Ausführungsformen dieses Erfindungsgegenstandes.

Gegenstand der Erfindung ist daher, die Verwendung von intumeszierenden Schichtsilikat-Intercalationsverbindungen mit erhöhter Expansionsgeschwindigkeit und/oder modifizierter Onset-Temperatur, erhältlich durch Einlagern mindestens einer Intercalatverbindung der Lithiumcitrat, Lithiumformiat, Lithiumacetat, Natriumformiat, Natriumacetat, Natriumoxalat, Natriumgluconat, Natriummethylat, Natriumethylat. Natriumpropylat, Kaliumformiat, Kaliumacetat, Kaliumgluconat, Kaliumoxalat, Ethylendiamintetraessigsäure-dikaliumsalz und Alkoholate von Lithium oder Kalium mit Methanol, Ethanol, 2-Propanol, 2-Butanol, tert.-Butanol, Benzylalkohol, 1-Decanol, Ethylenglykol, 1,3-Propandiol, 1,4-Butandiol und/oder Glycerin umfassenden Gruppe durch Kationenaustausch in natives, blähfähiges Schichtsilikat, durch Suspendieren von nativem, blähfähigem Vermiculit, Hydrobiotit und/oder Chlorit-Vermiculit mit einem mittleren Teilchendurchmesser von 0,1 mm bis 10 mm als Schichtsilikat in einer Lösung der Intercalatverbindung; Abtrennen der gebildeten Schichtsilikat-Intercalationsverbindung aus der Suspension, gegebenenfalls Waschen, und Trocknen, als intumeszierendes Brandschutzadditiv für die Herstellung von Flammschutz-Materialien, insbesondere für Brandschutz-Abdichtungen von Durchbrüchen, Durchführungen und sonstigen Öffnungen in Wänden, Böden und/oder Decken von Gebäuden.

Es hat sich überraschenderweise gezeigt, daß mit Hilfe der erfindungsgemäß eingesetzten Intercalatverbindungen sich eine hohe Variabilität der Eigenschaften der erhältlichen Schichtsilikat-Intercalationsverbindungen erreichen läßt, namentlich im Hinblick auf die Expansionsgeschwindigkeit, die Onset-Temperatur und das Expansionsvolumen.

Die hierin angesprochene Onset-Temperatur [°C] ist als die Temperatur definiert, bei der der thermische Expansionsprozeß des intumeszierenden Systems, also hier der erfindungsgemäßen Schichtsilikat-Intercalationsverbindungen beginnt, das heißt die Temperatur zu Beginn des Expansionsvorgangs. Die herkömmlichen und im Handel erhältlichen blähfähigen nativen Schichtsilikate, beispielsweise der in dem Beispiel 1 angesprochene native Vermiculit aus China, besitzt eine Onset-Temperatur von 320°C, wenn diese mit Hilfe der nachfolgend beschriebenen Vorrichtung und den angegebenen Meßbedingungen bestimmt wird.

Die Expansionsgeschwindigkeit [%/°C] ist definiert als die prozentuale Zunahme des in der nachfolgenden Weise bestimmten Volumens der Schichtsilikat-Intercalationsverbindungen pro °C Temperatursteigerung.

Das Expansionsvolumen [%/mg] ist auf die Menge der Schichtsilikat-Intercalationsverbindung normiert und entspricht der Differenz zwischen dem Anfangsvolumen und dem Endvolumen der vollständig expandierten Schichtsilikat-Intercalationsverbindung. Nähere Angaben zur Bestimmung dieser Parameter finden sich im weiteren Verlauf der Beschreibung.

Als natives, blähfähiges Schichtsilikat verwendet man erfindungsgemäß blähfähigen Vermiculit, Hydrobiotit und/oder Chlorit-Vermiculit mit einem mittleren Teilchendurchmesser von 0,1 mm bis 10 mm, vorzugsweise 0,3 mm bis 1,0 mm.

Dabei führt man das Einlagern der Intercalatverbindung in der Weise durch, daß man das Schichtsilikat in einer Lösung der Intercalatverbindung in einem geeigneten Lösungsmittel suspendiert, die Intercalation gegebenenfalls unter Erhitzen bewirkt und die erhaltene Schichtsilikat-Intercalationsverbindung aus der Suspension abtrennt, gegebenenfalls wäscht und trocknet.

Als Lösungsmittel kann man hierbei Wasser, einen aliphatischen oder aromatischen Alkohol, einen Ether, einen Ester, ein Alkan, ein Cycloalkan, ein aromatisches Lösungsmittel und/oder ein Amin einsetzen. Besonders bevorzugt ist jedoch Wasser als Lösungsmittel.

Bei der Durchführung dieses Verfahrens arbeitet man vorzugsweise bei einer Konzentration der Intercalatverbindung in der Lösung von 0,01 Mol/l bis 5,0 Mol/l, vorzugsweise 0,1 Mol/l bis 1,0 Mol/l. Mit Vorteil bewirkt man die Intercalationsreaktion bei einer Temperatur von 10°C bis 150°C, vorzugsweise 25°C bis 60°C während einer Reaktionsdauer von 0,5 bis 144 Stunden, vorzugsweise 10 bis 36 Stunden.

Nach der Umsetzung trennt man die Schichtsilikat-Intercalationsverbindung vorzugsweise durch Filtration oder Dekantieren aus der Suspension ab, wäscht sie gegebenenfalls mit einigen Millilitern des verwendeten Lösungsmittels und trocknet dann. Das Trocknen kann bei Raumtemperatur, im Vakuum oder im Trockenschrank bei Raumtemperatur oder aber auch bei erhöhter Temperatur erfolgen. Vorzugsweise bewirkt man das Trocknen im Trockenschrank während 1 Stunde bis 12 Stunden bei 60 bis 80°C.

Die oben beschriebenen Schichtsilikat-Intercalationsverbindungen werden entweder als solches als intumeszierendes Brandschutzadditiv und/oder in geblähter Form als Additiv für die Herstellung von Flammschutz-Materialien, sowie für die Herstellung von hochtemperaturbeständigen Isolations- und Dämmplatten und Dichtungen eingesetzt, insbesondere für Brandschutz-Abdichtungen von Durchbrüchen, Durchführungen und sonstigen Öffnungen in Wänden, Böden und/oder Decken von Gebäuden. Hierzu bringt man diese Schichtsilikat-Intercalationsverbindungen in üblicher Weise in die für solche Anwendungszwecke eingesetzten Matrixmaterialien ein, und zwar in den für angestrebten Expansionseffekt notwendigen Mengen.

Die oben angesprochenen Expansionseigenschaften der erfindungsgemäß erhältlichen Schichtsilikat-Intercalationsverbindungen werden durch thermomechanische Analyse über die Dimensionsänderung des Materials in Abhängigkeit von der Temperatur gemessen. Hierzu wird eine Probe auf einen Probenträger aufgebracht, der mit einer Meßsonde versehen und in einen Ofen eingebracht wird, welcher unter Anwendung eines geeigneten Temperaturprogramms innerhalb eines vorbestimmten Temperaturbereichs aufgeheizt wird. Die Meßsonde kann zusätzlich mit einer variablen Auflast beaufschlagt werden. Bei dieser Messung wird eine positive Dimensionsänderung als Expansion bezeichnet.

Zur Bestimmung des Expansionsverhaltens der erfindungsgemäß erhältlichen Schichtsilikat-Intercalationsverbindungen wird die pulverförmige Probe in einen Korundtiegel eingebracht und mit einem Stahltiegel abgedeckt. Der Stahltiegel gewährleistet bei der Ausdehnung der Probe die ruckfreie Übertragung der Dimensionsänderung der Probe auf die Meßsonde. Diese Tiegelanordnung wird auf den Probenträger der thermomechanischen Analysevorrichtung (TMA) aufgebracht und in den Ofen eingeführt.

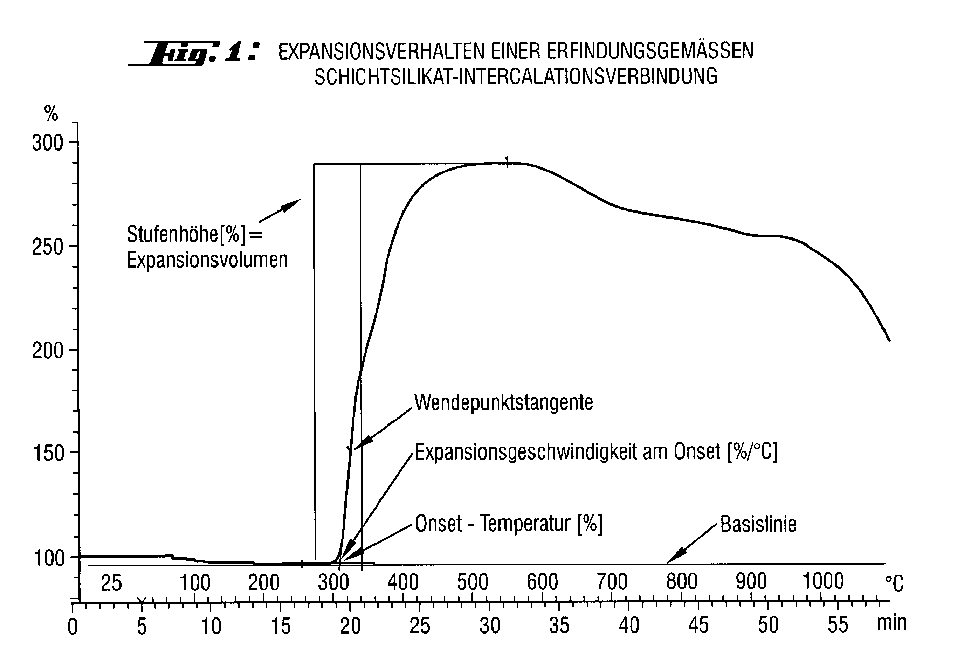

Als Ergebnis einer solchen thermomechanischen Analyse erhält man eine Kurve, wie sie in der beigefügten Zeichnung dargestellt ist, in der einzigen
- **Figur 1**: in der die prozentuale Expansion des Materials als Linearverschiebung des Stahltiegels gegen die Temperatur aufgetragen ist.

Die Onset-Temperatur [°C] der Schichtsilikat-Intercalationsverbindung ist mathematisch als Schnittpunkt der verlängerten Basislinie vor der Expansion der Probe und der Wendetangente der Expansionskurve definiert.

Die Expansionsgeschwindigkeit des untersuchten intumeszierenden Materials im Bereich des Onsets entspricht der Steigung dieser Wendetangente. Die Einheit der Expansionsgeschwindigkeit ist demzufolge [%/°C].

Das Expansionsvolumen entspricht der horizontalen Stufe zwischen der Basislinie und dem Maximum der Kurve. Es gibt die Ausdehnung der Substanz [%] beziehungsweise der Ausgangslänge wieder. Da bei diesen Messungen das Volumen von der eingewogenen Substanzmenge abhängig ist, wird das Expansionsvolumen auf die Einwaage normiert. Als Einheit resultiert das normierte Expansionsvolumen in [%/mg].

Sämtliche in den nachfolgenden Beispielen angegebenen Messungen der hergestellten Schichtsilikat-Intercalationsverbindungen erfolgten mit Proben vergleichbarer Teilchengrößenverteilung im Bereich von 0,3 mm bis 1,0 mm.

Bei der Bestimmung der oben angesprochenen Parameter des Expansionsverhaltens wurden die Bedingungen eingehalten:

| | |
|---|---|
| Vorrichtung: | TMA/SDTA840; Firma Mettler-Toledo, Gießen, DE |
| Temperaturprogramm: | Dynamischer Modus (mit vorgeschalteter isothermer Phase während 5 Minuten bei 25°C) |
| Aufheizrate: | 20°C /min |
| Temperaturbereich: | 25°C bis 1100°C |
| Analysengas: | Synthetische Luft |
| Flußrate: | 60 ml /min |
| Auflast: | 0,06 N |
| Probengefäß: | 150 µl Korundtiegel + 150µl Stahltiegel (als Deckel |

Bei der Verwendung der erfindungsgemäß erhältlichen Schichtsilikat-Intercalationsverbindungen als intumeszierendes Brandschutzadditiv ist je nach Anwendung eine niedrigere oder höhere Onset-Temperatur erforderlich bei vorzugsweise einem durchwegs erhöhtem Expansionsvolumen, welche Eigenschaften auf das Schmelzverhalten der Kabel- und Rohrdurchführungen abgestimmt werden müssen. Erfindungsgemäß wird es ohne weiteres möglich, den Beginn der Expansion der Schichtsilikat-Intercalationsverbindung genau auf das Einsatzgebiet abzustimmen, und in dieser Weise eine höhere Variabilität der Intumeszenzmaterialien für den passiven Brandschutz zu erreichen.

Die erfindungsgemäß erhältlichen Schichtsilikat-Intercalationsverbindungen expandieren beim Erhitzen auf die Onset-Temperatur, welche entweder gezielt in einem Ofen durchgeführt werden kann zur Herstellung entsprechend expandierter Produkte oder beim Vorliegen anderer Heizquellen, wie Feuer, Lichtbestrahlung oder elektrischer Impulse, wobei dies auch namentlich dann der Fall ist, wenn die Schichtsilikat-Intercalationsverbindungen in eine Bindemittelmatrix eingebettet werden unter Bildung einer Brandschutz-Dichtmasse. Dabei ist festzuhalten, daß die erfindungsgemäß hergestellten Schichtsilikat-Intercalationsverbindungen auch unter Auflast expandieren und damit sehr starke Expansionskräfte freizusetzen vermögen, was insbesondere für ihren Einsatz als Intumeszenzmaterial von Bedeutung ist.

Die folgenden Beispiele dienen der weiteren Erläuterung der Erfindung.

### BEISPIEL 1 (Vergleich)

Dieses Beispiel verdeutlicht das Expansionsverhalten von herkömmlichem nativem blähfähigem Vermiculit aus China.

Man wägt in einem 150 µl Korundtiegel 20 mg handelsüblichen nativen Vermiculit ein und deckt diesen mit einem 150 µl Stahltiegel als Deckel ab, um eine gleichmäßige Kraftverteilung der Auflast zu gewährleisten. Dabei muß das Stahltiegelchen noch weit genug in den Korundtiegel eintauchen, um eine hinreichend gute Stabilität der gesamten Anordnung zu garantieren. Anschließend wird diese Probenanordnung derart auf den TMA-Probentisch gelegt, daß der TMA-Meßfühler (ein Quarzglasbügel) mittig in Kontakt mit dem Boden des Stahltiegels steht. Auf diese Weise ist garantiert, daß jede Längenänderung der Probe störungsfrei vom TMA-Meßfühler abgegriffen wird. Die Probe mit einer konstanten Auflast von 0,06 N beschwert und mit einer Aufheizgeschwindigkeit von 20°C/min auf 1100°C erhitzt. Gemessen wird die Längenänderung als Funktion der Temperatur.

Das Material zeigt eine erste Onset-Temperatur von 320°C, ein Expansionsvolumen von 14,8 [%/mg] und eine Expansionsgeschwindigkeit von 4,2 [%/°C].

### BEISPIEL 2

Intercalation von Natriumacetat durch Kationenaustausch in nativem, blähfähigem Vermiculit.

Man legt in einem 100 ml Becherglas 3 g (0,05 Mol) nativen Vermiculit vor und versetzt ihn unter mäßigem Rühren mit einer wässrigen Lösung von 0,1 Mol/l = 5,0 Mol/l Natriumacetat in Lösung in 30 ml Wasser. Man läßt diese Reaktionsmischung während 3 Tagen bei Raumtemperatur stehen. Zur Aufarbeitung wird die Suspension über einen Glasfilter der Porengröße G 1 abfiltriert und portionsweise mit 100 ml Wasser gewaschen. Anschließend wird der kationenausgetauschte Vermiculit während 12 Stunden bei 60°C im Trockenschrank getrocknet. Das Material ist über Monate hinweg lagerbeständig.

Die Bestimmung des Exansionsverhaltens in der oben beschriebenen Weise zeigt, daß die in dieser Weise erhaltene Vermicult-Intercalationsverbindung einen Onset-Temperatur von 277°C, ein normiertes Expansionsvolumen von 16,3 [% /mg] und eine Expansionsgeschwindigkeit von 16,4 [%/°C] aufweist.

### BEISPIEL 3

In gleicher Weise wie in Beispiel 2 beschrieben, wurden die in der nachfolgenden Tabelle 1 angegebenen Intercalatverbindungen in den gleichen blähfähigen Vermiculit durch Kationenaustausch eingelagert. Die Expansionseigenschaften der erhaltenen Vermiculit-Intercalationsverbindungen sind ebenfalls in der nachfolgenden Tabelle zusammengestellt.

**Tabelle**

| Typ Wirt | Intercalat | Onset-Temperatur [°C] | Expansions-volumen, normiert [%/mg] | Expansions-geschwindigkeit [%/°C] |
|---|---|---|---|---|
| Nativer Vermiculit | --- (Vergleich) | 320 | 14,8 | 4,2 |
| Nativer Vermiculit | EDTA-Dikaliumsalz | 235 | 20,8 | 17,2 |
| Nativer Vermiculit | Kaliumgluconat | 242 | 21,4 | 14.5 |
| Nativer Vermiculit | Kaliumoxalat | 244 | 19,0 | 21,8 |
| Nativer Vermiculit | Kaliumacetat | 248 | 20,8 | 18.6 |
| Nativer Vermiculit | Kaliumformiat | 252 | 19,2 | 17,9 |
| Nativer Vermiculit | Natriumacetat | 277 | 16,3 | 16,4 |
| Nativer Vermiculit | Natriumglukonat | 297 | 18,0 | 17,4 |
| Nativer Vermiculit | Lithiumcitrat | 347 | 20,4 | 16,2 |
| Nativer Vermiculit | Lithiumacetat | 349 | 18,8 | 7,9 |
| Nativer Vermiculit | Natriumpropylat | 356 | 17,4 | 23.7 |
| Nativer Vermiculit | Lithiumformiat 358 | | 19,0 | 21,6 |
| | | | | |
| Nativer Vermiculit | KNO3 (Vergleich) 237 | | 21 | 14,3 |
| | | | | |

### BEISPIEL 4 (Vergleichsbeispiel)

Zu Vergleichszwecken wurde entsprechend der Lehre des US-Patents 5,116,537 beziehungsweise der entsprechenden Europäischen Patentanmeldung 0 429 246 unter den gleichen Bedingungen Kaliumnitrat durch Kationenaustausch in den gleichen nativen blähfähigen Vermiculit eingelagert. Die erhaltene Vermiculit-Intercalationsverbindung besitzt, wie auch in der obigen Tabelle 1 angeführt, eine Onset-Temperatur von 237 [°C] ein Expansionsvolumen 21 [%/mg] und eine Expansionsgeschwindigkeit von 14,3 [%/°C].

Es jedoch zu erkennen, daß es erfindungsgemäß möglich ist, mit den definierten Intercalatverbindungen für den Brandschutz hervorragend geeignete Schichtsilikat-Intercalationsverbindungen herzustellen, deren Expansionsverhalten im Hinblick auf die Onset-Temperatur, das Expansionsvolumen und die Expansionsgeschwindigkeit in beliebiger Weise gezielt eingestellt werden können.

## Patentansprüche

1. Verwendung von intumeszierenden Schichtsilikat-Intercalationsverbindungen mit erhöhter Expansionsgeschwindigkeit und/oder modifizierter Onset-Temperatur, erhältlich durch Einlagern mindestens einer Intercalatverbindung der Lithiumcitrat, Lithiumformiat, Lithiumacetat, Natriumformiat, Natriumacetat, Natriumoxalat, Natriumgluconat. Natriummethylat, Natriumethylat, Natriumpropylat, Kaliumformiat, Kaliumacetat. Kaliumgluconat, Kaliumoxalat, Ethylendiamintetraessigsäure-dikaliumsalz und Alkoholate von Lithium oder Kalium mit Methanol, Ethanol, 2-Propanol, 2-Butanol, tert.-Butanol. Benzylalkohol, 1-Decanol, Ethylenglykol, 1,3-Propandiol, 1,4-Butandiol und/oder Glycerin umfassenden Gruppe durch Kationenaustausch in natives, blähfähiges Schichtsilikat, durch Suspendieren von nativem, blähfähigem Vermiculit, Hydrobiotit und/oder Chlorit-Vermiculit mit einem mittleren Teilchendurchmesser von 0,1 mm bis 10 mm, als Schichtsilikat in einer Lösung der Intercalatverbindung; Abtrennen der gebildeten Schichtsilikat-Intercalationsverbindung aus der Suspension, gegebenenfalls Waschen, und Trocknen, als intumeszierendes Brandschutzadditiv für die Herstellung von Flammschutz-Materialien, insbesondere für Brandschutz-Abdichtungen von Durchbrüchen, Durchführungen und sonstigen Öffnungen in Wänden, Böden und/ oder Decken von Gebäuden.

2. Verwendung nach Anspruch 1, **dadurch gekennzeichnet, daß** die Schichtsilikat-Intercalationsverbindung blähfähigen Vermiculit, Hydrobiotit und/oder Chlorit-Vermiculit mit einem mittleren Teilchendurchmesser von 0,3 mm bis 1,0 mm enthält.

3. Verwendung nach Anspruch 1 oder 2, **dadurch gekennzeichnet, daß** die Schichtsilikat-Intercalationsverbindung unter Verwendung von Wasser, ein aliphatischer oder aromatischer Alkohol, ein Ether, ein Ester, ein Alkan, ein Cycloalkan, ein aromatisches Lösungsmittel und/oder ein Amin als Lösungsmittel hergestellt worden ist.

4. Verwendung nach mindestens einem der Ansprüche 1 bis 3, **dadurch gekennzeichnet, daß** die Schichtsilikat-Intercalationsverbindung unter Verwendung der Intercalatverbindung in einer Konzentration von 0,01 Mol/l bis 5,0 Mol/l, vorzugsweise 0,1 Mol/l bis 1,0 Mol/l in der Lösung hergestellt worden ist.

5. Verwendung nach mindestens einem der Ansprüche 1 bis 4, **dadurch gekennzeichnet, daß** die Schichtsilikat-Intercalationsverbindung bei einer Temperatur der Intercalationsreaktion von 10°C bis 150°C, vorzugsweise 25°C bis 60°C hergestellt worden ist.

6. Verwendung nach mindestens einem der Ansprüche 1 bis 5, **dadurch gekennzeichnet, daß** die Schichtsilikat-Intercalationsverbindung mit einer Reaktionszeit der Intercalationsreaktion von 0,5 bis 144 Stunden, vorzugsweise 10 bis 36 Stunden hergestellt worden ist.

7. Verwendung nach mindestens einem der Ansprüche 1 bis 6, **dadurch gekennzeichnet, daß** die Schichtsilikat-Intercalationsverbindung durch Filtration oder Dekantieren aus der Suspension abgetrennt, gegebenenfalls mit einigen Millilitern des verwendeten Lösungsmittels gewaschen und dann getrocknet worden ist.

8. Verwendung nach Anspruch 7, **dadurch gekennzeichnet, daß** das Trocknen bei Raumtemperatur, im Vakuum oder im Trockenschrank bei erhöhter Temperatur durchgeführt worden ist.

9. Verwendung nach Anspruch 8. **dadurch gekennzeichnet, daß** das Trocknen im Trockenschrank während 1 Stunde bis 12 Stunden bei 60 bis 80°C durchgeführt worden ist.

## Claims

1. Use of intumescent layered silicate intercalation compounds with increased volume of expansion and/or modified onset temperature, obtainable by the storage of at least one intercalate compound of the group comprising lithium citrate, lithium formiate, lithium acetate, sodium formiate, sodium acetate, sodium oxalate, sodium gluconate, sodium methylate, sodium ethylate, sodium propylate, potassium formiate, potassium acetate, potassium gluconate, potassium oxalate, ethylene diamine tetraacetic acid dipotasisum salt and alcoholates of lithium or potassium with methanol, ethanol, 2-propanol, 2-butanol, tert.-butanol, benzyl alcohol, 1-decanol, ethylene glycol, 1.3-propane diol, 1,4-butane diol and/or glycerine by cation exchange in native intumescent layered silicate, by the suspension of native, intumescent vermiculite, hydrobiotite and/or chlorite-vermiculite with a mean particle diameter of 0.1 mm to 10 mm as a layered silicate in a solution of the intercalate compound: separation of the layered silicate intercalation compound formed from the suspension, if necessary washing, and drying, as an intumescent fire protection additive for the manufacture of flameproof materials, in particular for fireproof seals for perforations, openings and other orifices in walls, floors and/or ceilings of buildings.

2. Use according to Claim 1, **characterised in that** the layered silicate intercalation compound contains intumescent vermiculite, hydrobiotite and/or chlorite-vermiculite with a mean particle diameter of 0.33 mm to 1.0 mm.

3. Use according to Claim 1 or 2, **characterised in that** the layered silicate intercalation compound has been produced using water, an aliphatic or aromatic alcohol, an ether, an ester, an alkane, a cycloalkane, an aromatic solvent and/or an amine as solvent.

4. Use according to at least of Claims 1 to 3, **characterised in that** the layered silicate intercalation compound has been produced using the intercalate compound in a concentration of 0.01 mol/l to 5.0 mols/l, preferably 0.1 mol/l to 1.0 mol/l in the solution.

5. Use according to at least one of Claims 1 to 4, **characterised in that** the layered silicate intercalation compound has been produced at a temperature of the intercalation reaction of 10°C to 150°C, preferably 25°C to 60°C.

6. Use according to at least one of Claims 1 to 5, **characterised in that** the layered silicate intercalation compound has been produced with a reaction time of the intercalation reaction of 0.5 to 144 hours, preferably 10 to 36 hours.

7. Use according to at least one of Claims 1 to 6, **characterised in that** the layered silicate intercalation compound has been separated by filtration or decanting from the suspension, if necessary washed with a few millilitres of the solvent used, then dried.

8. Use according to Claim 7, **characterised in that** the drying has been carried out at room temperature, in a vacuum or in he drying cabinet at a high temperature.

9. Use according to Claim 8, **characterised in that** the drying has been carried out in the drying cabinet for 1 hour to 12 hours at 60 to 80°C.

## Revendications

1. Utilisation de composés intercalaires intumescents de silicate lamellaire ayant une vitesse d'expansion augmentée et/ou une température de démarrage modifiée, pouvant être obtenus par inclusion d'au moins un composé intercalaire de citrate de lithium, formiate de lithium, acétate de lithium, formiate de sodium, acétate de sodium, oxalate de sodium, gluconate de sodium, méthylate de sodium, éthylate de sodium, propylate de sodium, formiate de potassium, acétate de potassium, gluconate de potassium, oxalate de potassium, acide éthylènediaminetétraacétique sel de dipotassium et alcoolates de lithium ou de potassium avec le méthanol, l'éthanol, le 2-propanol, le 2-butanol, le tert.-butanol, le benzylalcool, le 1-décanol, l'éthylèneglycol, le 1,3-propanediol, le 1,4-butanediol et/ou un groupe comprenant du glycérol par échange de cations dans du silicate lamellaire naturel capable de gonfler, par mise en suspension de vermiculite, d'hydrobiotite et/ou de chlorite-vermiculite avec un diamètre moyen des particules de 0,1 mm à 10 mm naturels capables de gonfler comme silicate lamellaire dans une solution de composé intercalaire ; séparation de la suspension du composé formé silicate lamellaire-composé intercalaire, éventuellement lavage, et séchage, comme additif ignifuge intumescent pour la préparation de matériaux pare-flammes, en particulier d'étanchéifications pare-flammes de traversées, de passages et d'autres ouvertures dans des parois, des sols et/ou des plafonds de bâtiments.

2. Utilisation selon la revendication 1, **caractérisée en ce que** le composé intercalaire de silicate lamellaire contient de la vermiculite, de l'hydrobiotite et/ou de la chlorite-vermiculite capable de gonfler ayant un diamètre moyen des particules de 0,3 mm à 1,0 mm.

3. Utilisation selon la revendication 1 ou 2, **caractérisée en ce que** le composé intercalaire de silicate lamellaire est préparé en utilisant de l'eau, un alcool aliphatique ou aromatique, un éther, un ester, un alcane, un cycloalcane, un solvant aromatique et/ou une amine comme solvant.

4. Utilisation selon au moins l'une des revendications 1 à 3, **caractérisée en ce que** le composé intercalaire de silicate lamellaire est préparé en utilisant le composé intercalaire à une concentration de 0,01 mol/l à 5,0 mol/l, de préférence de 0,1 mol/l à 1,0 mol/l dans la solution.

5. Utilisation selon au moins l'une des revendications 1 à 4, **caractérisée en ce que** le composé intercalaire de silicate lamellaire est préparé à une température de réaction d'intercalation de 10 °C à 150 °C, de préférence de 25 °C à 60 °C.

6. Utilisation selon au moins l'une des revendications 1 à 5, **caractérisée en ce que** le composé intercalaire de silicate lamellaire est préparé avec un temps de réaction de la réaction d'intercalation de 0,5 à 144 heures, de préférence de 10 à 36 heures.

7. Utilisation selon au moins l'une des revendications 1 à 6, **caractérisée en ce que** le composé intercalaire de silicate lamellaire est séparé de la suspension par filtration ou décantation, éventuellement lavé avec quelques millilitres du solvant utilisé et ensuite séché.

8. Utilisation selon la revendication 7, **caractérisée en ce que** l'on effectue le séchage à température ambiante, sous vide ou dans une étuve de séchage à température élevée.

9. Utilisation selon la revendication 8, **caractérisée en ce que** l'on effectue le séchage dans une étuve de séchage pendant 1 heure à 12 heures entre 60 et 80 °C.
